# EUROPEAN PATENT APPLICATION

(11) **EP 1 986 445 A2**
(43) Date of publication of application: **29.10.2008**
(21) Application number: 08007542.7
(22) Date of filing: 17.04.2008
(51) Int. Cl.: H04N 13/00

(54) **Stereoscopic projection display apparatus**

(30) Priority: 27.04.2007 JP 2007117947
(71) Applicant: Hitachi, Ltd., Chiyoda-ku Tokyo 100-8280 (JP)
(72) Inventor: Otsuka, Rieko, Tokyo 100-8220 (JP); Hoshino, Takeshi, Tokyo 100-8220 (JP); Horii, Youichi, Tokyo 100-8220 (JP)
(74) Representative: Strehl Schübel-Hopf & Partner

(57) **Abstract**

There is provided a display apparatus by which different information and images can be seen depending on a view angle and a viewer, a stereoscopic image can be seen realistically from surrounding directions, and a binocular stereoscopic vision is realized without using glasses and the like. The display apparatus according to the invention is characterized by including a rotary mechanism (7) which rotates a polygonal pyramid body (6) having a mirror on its surface and a disk (8) having a slits fixed coaxially with the polygonal pyramid body, a display part (9) which thereby displays images for projecting information or images differing from each other in accordance with an angle direction in which each side surface of the polygonal pyramid faces on each side surface of the polygonal pyramid body, and a light source part (10) for projecting the images displayed on the display part onto the polygonal pyramid body.

## Description

### BACKGROUND OF THE INVENTION

### Field of the invention

The present invention relates to a display apparatus for a public space such as a station and a shopping center, by which information can be seen from any direction, or a display apparatus which can be seen as a stereoscopic image from its surrounding area.

### Description of related art

There is proposed a stereoscopic display apparatus which displays a stereoscopic image by using a rotating screen. As one example, there is the one which creates two-dimensional image data of an object when the object is seen from each direction around, from three-dimensional image data expressing the three-dimensional object (while hidden surface erasure processing for erasing the data of an invisible part is performed when the two-dimensional image data is created from the three-dimensional image data), and projects the data onto the rotating screen in sequence while the two-dimensional image to be projected onto the screen is changed in sequence in conjunction with the change of the direction of the screen according to the rotation. According to this, when this screen is seen from a certain point, the image displayed there gradually changes by making the rotation of the screen fast. By performing the image display in this manner, the projected image on the screen can be seen as a three-dimensional image due to the afterimage effect of vision (see JP-A-2001-103515, for example).

Further, there is proposed an art which is configured to photograph a display object from different view points to create respective slide images, and project the slide image obtained by the photographing from the corresponding view point every time the rotating screen faces in the direction of each of these view points in sequence. In this art, by enhancing the rotational speed of the screen to about 300 to 600 rpm, the afterimage of naked eyes is induced to form a false three-dimensional image on the screen. Also in this art, by continuously photographing the display object by a camera moving around the object, a cylindrical film of the photographed image is created, the image of the cylindrical film is sequentially read, the image is focused at a position of a space via a mirror rotating synchronously with reading of the cylindrical film, and by sufficiently enhancing the rotational speed of the mirror, a three-dimensional space floating image is generated due to the afterimage of the naked eyes. (See JP-A-2002-271820, for example).

Further, there is proposed a stereoscopic image display apparatus in which a screen having a view angle control filter on its surface is rotated, and an image which is reconstructed by arranging images of an object seen from a plurality of angles is projected from an electronic projector onto the screen via a polygonal mirror surrounding the screen, whereby different images can be displayed in accordance with the direction in which the screen faces (see JP-A-2005-221690, for example).

### BRIEF SUMMARY OF THE INVENTION

Incidentally, because the art disclosed in above described JP-A-2001-103515 is configured to realize stereoscopic vision by utilizing the afterimage, it is necessary to display images which slightly differ from one another substantially simultaneously. For this purpose, a sufficiently large number of two-dimensional images are necessary and tremendous time and efforts are required for creating those. Also, a large-capacity memory for storing the data of the two-dimensional images is required. Further, since high-speed rotation of the screen is required, it is necessary to project the two-dimensional images corresponding to the direction of the screen with high accuracy, and to maintain synchronism of the rotation of the screen and the projection timing of the two-dimensional images to the screen with high accuracy.

Further, also in the art disclosed in above described JP-A-2002-271820, by projecting a two-dimensional slide image onto the screen rotating at a high-speed, or by focusing a two-dimensional image which is read from the cylindrical film on a peripheral space position by means of a mirror rotating at a high speed, the afterimage of naked eyes is caused to function so that a three-dimensional image can be seen. In the case that the slide image is projected to the screen, as in the arts disclosed in above described JP-A-2001-103515 and JP-A-2002-271820, when the screen faces the above described view point, it is necessary to project the slide image corresponding to this onto the screen, however, since the screen rotates at a high speed, very high accuracy is required in the timing of projection of the slide image to the screen.

Further, in the art disclosed in above described JP-A-2005-221690, the images of the object seen from a plurality of directions at the same time are projected to the rotary screen by reflecting those with the polygonal mirror from the electronic projector, and only the image in the direction in which the screen faces is displayed by the view angle control function on the rotary screen surface. However, in order to enhance resolution of the image displayed on the screen, a projector which can display the image with high resolution has to be used, and a plurality of projectors have to be used in combination, which increases the cost.

The present invention is made in view of the above points, and an object of the present invention is to provide a stereoscopic display apparatus which makes it possible to see a sharp stereoscopic image with high resolution from any direction without considering synchronism of rotation of a screen and display switching of a two-dimensional image.

Further, an object of the present invention is to provide a display apparatus which allows different information and images to be seen at respective view angles and for individuals.

Further, another object of the present invention is to provide a display apparatus which makes it possible to see a stereoscopic image seeable from directions around it, realistically.

Further, still another object of the present invention is to provide a display apparatus which realizes binocular stereoscopic vision without using eyeglasses or the like.

In order to achieve the above-described objects, the present invention is characterized by including a rotary mechanism rotating a polygonal pyramid body having a mirror on its surface, and a disk with slits fixed coaxially with the polygonal pyramid body, a display part thereby displaying images to be projected information or images differing from each other depending on an angle direction in which the polygonal pyramid body faces onto the polygonal pyramid body, and a light source part for projecting the images displayed on the display part to the polygonal pyramid body.

Further, the present invention is characterized by including a detection means which detects the rotational angular velocity of the polygonal pyramid body, and a control means which controls lighting and extinguishing of a light source part depending on the direction in which the polygonal pyramid body faces.

Further, the present invention is a display apparatus characterized by including a control means which controls lighting and extinguishing of the light source part in synchronization with angular resolution of the display images of the display part.

Further, the present invention is characterized by including a display means by which all mirror images reflected on respective mirror side surfaces of the polygonal pyramid body are seen on the same axis.

Further, the present invention is characterized by including an optical path adjusting means which diffuses and gathers light from the light source in accordance with the distance from the light source part to the display part and the size of the display part.

Further, the present invention is characterized by including a view angle limiting means which prevents a plurality of mirror images reflected on the side surfaces of the polygonal pyramid body from being seen at the same time.

Further, the present invention is characterized in that a stereoscopic image is formed by multiple information or images differing from each other.

Further, the present invention is characterized by further including a means which acquires an image to be displayed on the display part and causes a storage part to store it, so that a projection image stored in the storage part is read by that means to be outputted to the display part.

According to the present invention, there is provided the effect of being able to see different information or images depending on which direction the display part is seen.

Further, according to the present invention, there is provided the effect of being able to achieve display in accordance with the viewing direction such that when an object is displayed, one can see a back side of the object if one goes around to the back side and sees the display, for example.

Further, according to the present invention, there is provided the effect of being able to perform intuitive display such that, for example, when displaying the information of leading the way or passage, the information corresponding to the direction in which one faces is displayed.

Further, according to the present invention, an image which floats due to binocular stereoscopic vision can be seen without using eyeglasses or the like, and the stereoscopic image can be enjoyed from anywhere in all directions over 360 degrees even from the back side while keeping the effect. In addition, the image source obtained from the storage part may be a moving image, and further, a plurality of people can enjoy the effect at the same time.

Further, according to the present invention, the number of images around can be optionally changed, and thus a stereoscopic image can be enjoyed with suitable angular resolution depending on the image.

Other objects, features and advantages of the invention will become apparent from the following description of the embodiments of the invention taken in conjunction with the accompanying drawings.

### BRIEF DESCRIPTION OF THE SEVERAL VIEWS OF THE DRAWINGS

Fig. 1 is a view for explaining the relationship between a real image and a mirror image of an object when the object is placed in front of a mirror;
Figs. 2A and 2B are top views of Fig. 1 for explaining the relationship of the real image and the mirror image of the object when the object is placed in front of the mirror;
Fig. 3 is a view for explaining the method for presenting different images to a plurality of directions by using the mirror image of the mirror;
Fig. 4 is view showing one example of the positional relationship of a viewer, a mirror and a plane image;
Fig. 5 is an external perspective view showing a first embodiment of a display apparatus according to the present invention;
Fig. 6 is a side view showing the first embodiment of the display apparatus according to the present invention;
Figs. 7A and 7B are views explaining the timing of lighting and extinguishing of a light source in the first embodiment of the display apparatus according to the present invention;
Fig. 8 is a view showing optical path adjustment;
Fig. 9 is a view showing output images to be displayed on a liquid crystal panel and the arrangement thereof;
Fig. 10 is a view explaining a method for creating frame images constituting the output images to be displayed on the liquid crystal panel;
Fig. 11 is a view showing another embodiment of a polygonal pyramid mirror in the first embodiment of the display apparatus according to the present invention;
Figs. 12A and 12B are views showing a shielding method for preventing a plurality of mirror images from being seen at the same time in the first embodiment of the display apparatus according to the present invention;
Fig. 13 is an external perspective view showing a second embodiment of the display apparatus according to the present invention;
Fig. 14 is a side view showing the second embodiment of the display apparatus according to the present invention;
Figs. 15A and 15B are views explaining the timing of lighting and extinguishing of a light source in the second embodiment of the display apparatus according to the present invention;
Fig. 16 is a diagram showing a control processing flow in the second embodiment of the display apparatus according to the present invention;
Fig. 17 is an external perspective view showing a third embodiment of the display apparatus according to the present invention;
Fig. 18 is a side view showing the third embodiment of the display apparatus according to the present invention; and
Fig. 19 is a diagram showing a control processing flow in the third embodiment of the display apparatus according to the present invention.

### DETAILED DESCRIPTION OF THE INVENTION

Some embodiments of a display apparatus according to the present invention will be described with reference to the drawings.

### (Embodiment 1)

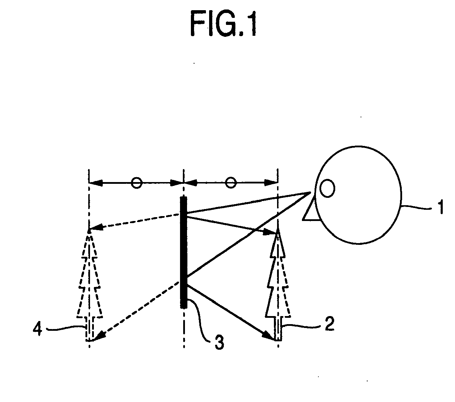

A first embodiment of the display apparatus according to the present invention, which makes information seeable from any direction for a public space such as a station and a shopping center will be described by using Figs. 1 to 12.

Fig. 1 is a view illustrating the property of a mirror. When an object 2 is placed in front of a viewer 1, and a mirror 3 is further placed in front of the object 2, a mirror image 4 of the object 2 looks as if it were located at a position symmetric about a plane with respect to the mirror 3 when seen from the viewer 1. That is, the distance between the object 2 and the mirror 3, and the distance between the mirror image 4 and the mirror 3 are equal. Conversely, the position of the mirror image 4 of the object 2 which is seen in the mirror 3 is uniquely decided by the positional relationship of the mirror 3 and the object 2.

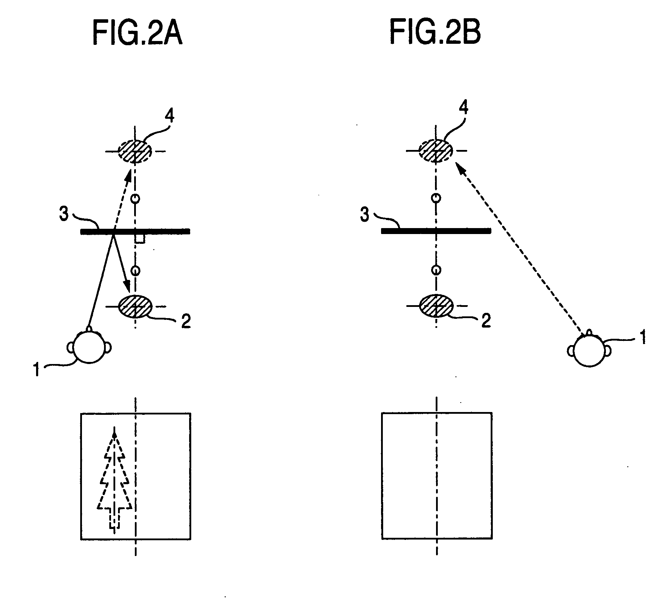

Figs. 2A and 2B are top views of Fig. 1. When the positions of the mirror 3 and the object 2 are fixed, the spatial position of the mirror image 4 does not change even if the position of the viewer 1 changes. When the straight line connecting the viewer 1 and the mirror image 4 has an intersection with the mirror 3 as in Fig. 2A, the viewer 1 can see the mirror image 4 via the mirror 3. On the other hand, when the viewer 1 and the mirror image 4 do not have an intersection as in Fig. 2B, the viewer 1 cannot see the mirror image 4 at all.

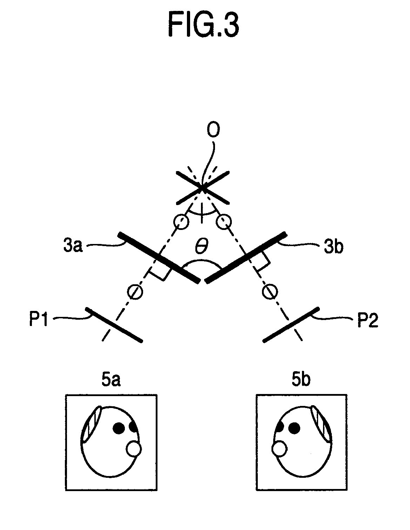

Fig. 3 is a principle diagram for displaying the information which should be seen depending on a viewing direction by utilizing a mirror image. For simplifying the explanation, the mechanism which presents different images to the respective directions by using two mirrors will be described. A mirror 3a and a mirror 3b are disposed so that those are equidistant from a center point O, and the contained angle becomes θ. Further, two-dimensional images 5a and 5b are disposed at positions P1 and P2 so as to face the mirrors 3a and 3b, respectively. At this time, the two-dimensional image 5a is placed so that the distance between the center O and the mirror 3a, and the distance between the two-dimensional image 5a and the mirror 3a are equal. Further, the two-dimensional image 5b is also placed so that the distance between the center O and the mirror 3b and the distance between the two-dimensional image 5b and the mirror 3b are equal. This makes it possible to show both of the positions of the two mirror images of the two-dimensional image 5a and the two-dimensional image 5b as if those were located at the center O, and is becomes possible to present proper information in correspondence with the respective directions of the positions P1 and P2.

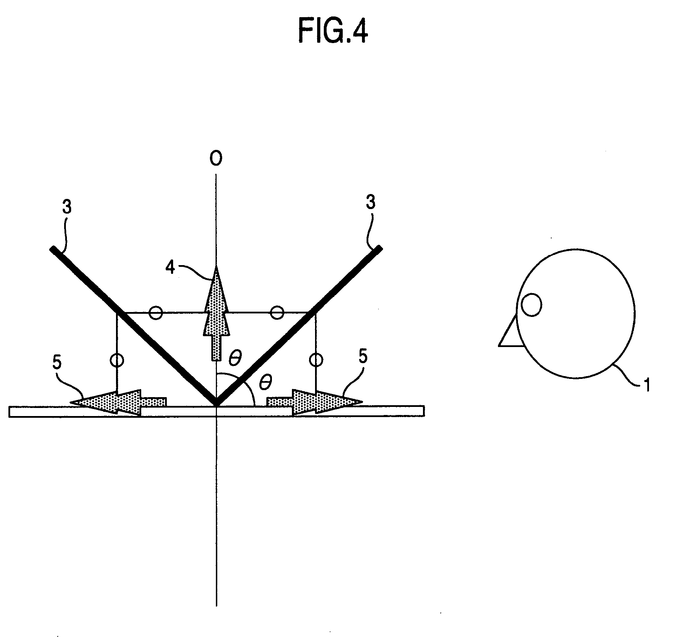

Fig. 4 is a view showing one example of the positional relationship of the viewer, mirror and two-dimensional image. In order that the viewer 1 sees the object through the mirror 3 as if the object were located at the center axis O, the mirror 3 and the two-dimensional image 5 only have to be disposed so that the mirror image 4 is located at the center axis O. That is, the mirror 3 and the two-dimensional image 5 only have to be placed so that the angle between the center axis O and the mirror 3, and the angle between the mirror 3 and the two-dimensional image 5 surely become equal. The angle θ between the mirror 3 and the center axis O is optional. However, since the viewer 1 can see the mirror image only from the angle θ between the mirror 3 and the two-dimensional image 5, the angle of visibility becomes small if the θ is too small, and therefore, the θ is desirably around 45°.

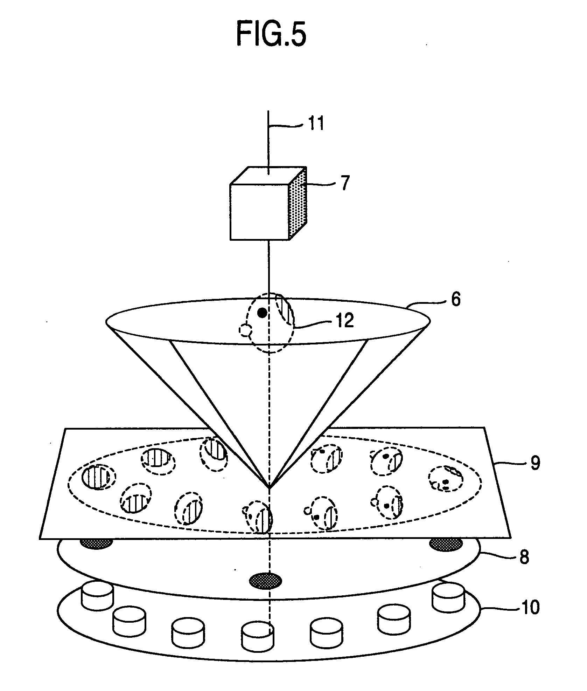

Fig. 5 is an external perspective view showing the first embodiment of the display apparatus according to the present invention. In the first embodiment, a mirror 6 in the shape of an n-angular pyramid, and a disk 8 having "n" slits are rotated continuously or stepwise by a rotary mechanism 7. It is configured so that a liquid crystal panel 9 on which "m" images are displayed is placed between the mirror 6 in the shape of the n-angular pyramid and the disk 8, and a light source plate 10 on which "m"' light sources are placed is placed below the disk 8 having the slits, whereby only at the moment when each of the slits of the disk 8 having the slits and each of the light sources of the light source plate 10 overlap with each other, the information which should be seen from that direction can be seen as a mirror image 12 on a center axis 11. The light source may be any light source as long as the light source can project the image displayed on the liquid crystal panel 9 onto the mirror 6 in the shape of the n-angular pyramid. In the case of m = m', the image and the mirror can be placed on the optical axis, and therefore, a clear mirror image can be formed.

At this time, it is necessary that the mirror 6 in the shape of the n-angular pyramid, the liquid crystal panel 9 and the center axis 11 have the positional relationship as shown in Fig. 4, that is, it is configured by the mirror 6 in the shape of the n-angular pyramid which is designed so that the mirror image 12 of the image displayed on the liquid crystal panel 9 overlaps just on the center axis 11. If the respective mirror surfaces of the mirror 6 in the shape of the n-angular pyramid and the slits of the disk 8 are fixed to correctly face one another, when those are rotated by the rotary mechanism 7, it is unnecessary to synchronize the liquid crystal panel 9 with an image projection part configured by the light source plate 10. The liquid crystal panel 9 is an ordinary liquid crystal display from which the backlight part is removed. In this embodiment, the one made by removing the backlight part from the liquid crystal display is described as an example, but the present invention is not limited to this configuration, and the display may be switched to project the image onto the mirror 6 in the shape of the n-angular pyramid which sequentially rotates by using the display with a backlight. That is, it is suitable if only the corresponding images can be displayed on the mirrors configuring the polygonal pyramid.

Each of the light sources of the light source plate 10 may be a point light source such as an LED, which is relatively small in size, and therefore, the size of the entire casing can be designed to be small as compared with the projector type one.

Further, the definition of the above described top and bottom positions is used, for facilitating understanding, in relation with the positions where the rotary shaft and the image are formed, and it is not limited to the positional relationship with the floor and ceiling of the installation place of the stereoscopic display apparatus, for example, and the top and bottom may be reversed. Further, the positional relationship of the liquid crystal panel 9 and the disk 8 having the slits is not limited to the one shown in Fig. 5, but the disk 8 having the slits may be placed above the liquid crystal panel 9.

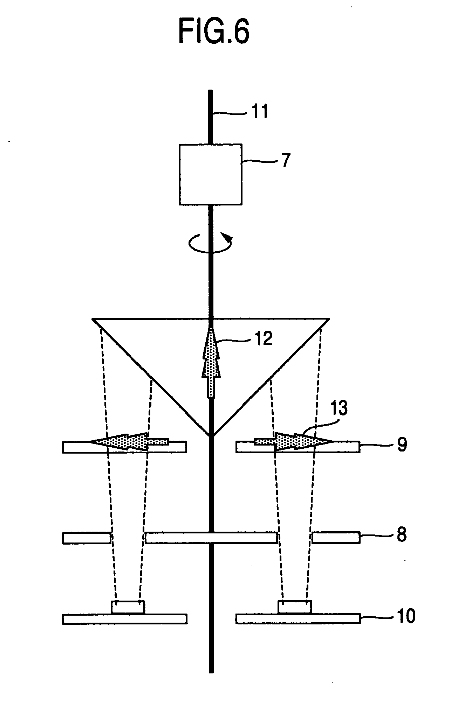

Fig. 6 is a side view showing the first embodiment of the display apparatus according to the present invention. The mirror 6 in the shape of the n-angular pyramid and the disk 8 having the slits having n slits are fixed to the center axis and the rotary shaft 11, and are rotated continuously or stepwise by the rotary mechanism 7. The liquid crystal panel 9 and the LED light source plate 10 do not have to rotate, and therefore, those are mechanically separated from the rotary shaft 11. The light of the LED of the LED light source plate 10 travels vertically upward, and passes through the slit of the disk 8 having the slits to pass through the image 13 displayed on the liquid crystal panel 9 to impinge against each side surface of the mirror 6 in the shape of the n-angular pyramid. This causes the mirror image of the image 13 displayed on the liquid crystal panel 9 to be seen on the center axis 11.

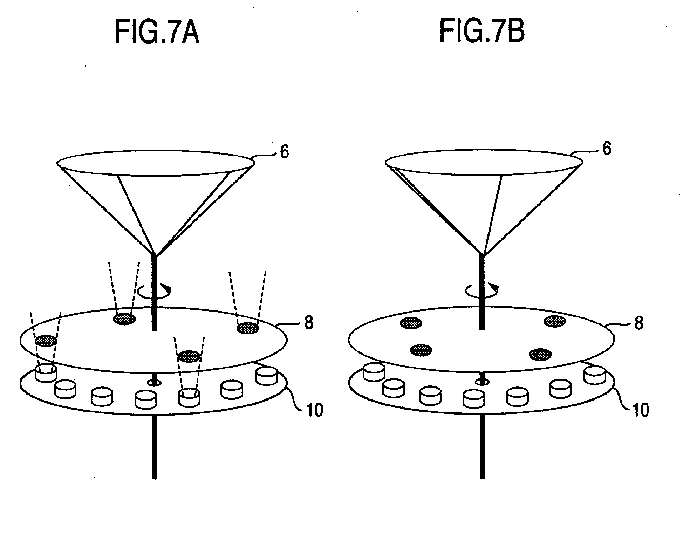

Next, by using Figs. 7A and 7B, the interval (the timing of lighting and extinguishing) of the image projected onto the mirror 6 in the shape of the n-angular pyramid will be described. For simplifying the explanation, it will be made without illustrating the liquid crystal panel. At the time of "t1", the positions of the mirror 6 in the shape of the n-angular pyramid, the disk 8 having the slits, and the LED light source plate 10 are assumed to be as shown in Fig. 7A. At this time, each of the slits of the disk 8 is in the state where each of the slits is directly above the LED placed on the LED light source plate 10, and the light of the LED travels vertically upward. Since the mirror 6 in the shape of the n-angular pyramid and the disk 8 having the slits are rotated, those are not always located at the same positions. That is, when it is assumed that, at the time of "t2" which is the time after t seconds passed slightly from the time of t1 which is in the state of Fig. 7A, the position of the disk 8 having the slits changes as shown in Fig. 7B, and each of the slits is not located directly above each of the LEDs of the LED light source plate 10, the optical path is completely shut off and nothing is projected onto the mirror 6 in the shape of the n-angular pyramid. That is, until the time when each of the slits of the disk 8 comes directly above the LED placed on the LED light source plate 10, the mirror image cannot be seen by the eyes of the viewer, but if this extinguished interval is sufficiently short, the image can be seen as if it was always displayed by the eyes of the viewer due to the afterimage phenomenon.

Further, the relationship of the number "n" of the slits of the disk 8 having the slits and the number "m'" of the light sources of the light source plate 10 is optional as long as the relationship is based on the formula of m' = k x n (k is a constant such as 1, 2 ...).

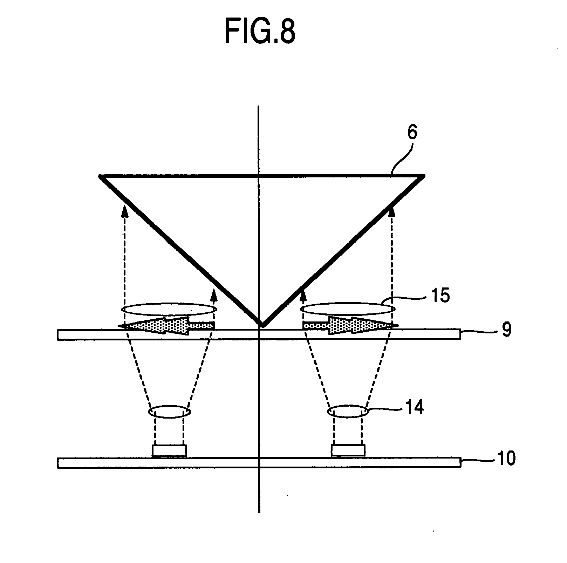

Next, details of optical path adjustment will be described by using Fig. 8. For simplifying the explanation, it will be made by omitting the disk 8 having the slits shown in Fig. 5 here. When the LEDs of the LED light source plate 10 which are individually used are point light sources, because the light per se is of a beam type, in order to emit it so as to cover the image region displayed on the liquid crystal panel 9, it is necessary to perform adjustment optically to expand the light up to a sufficient area. Thus, the adjustment is performed so that the light is once expanded by using a cylindrical lens 14 and the like, and the light is further converted into parallel light by using a Fresnel lens 15 and the like. The Fresnel lens 15 may be placed between the liquid crystal panel 9 and the mirror 6 in the shape of the n-angular pyramid, or may be placed between the cylindrical lens 14 and the liquid crystal panel 9.

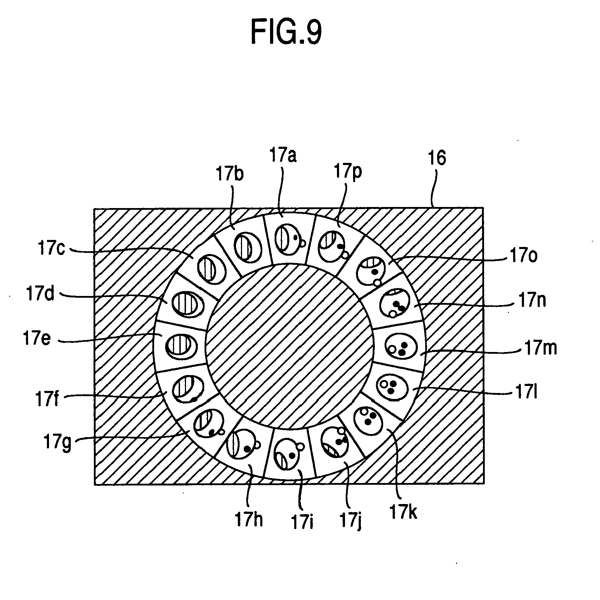

Fig. 9 is an example of a display image 16 to be displayed on the liquid crystal panel 9. In the display image 16, the respective frame images 17a to 17p are arranging on the circumference so that correct information is presented in the direction to be seen when it is seen as a mirror image, considering horizontal reverse by the mirror. At this time, it is necessary that the number and the display positions of the frame images correspond to the number and the installation positions of the LEDs on the LED light source plate. As for the frame images 17a to 17p, images of one subject from a plurality of directions may be arranged as in the drawing, and in this case, by going around in the circumferential direction, it is possible to see the stereoscopic image of the subject. These frame images 17a to 17p may be created by computer graphics, or may be made by photographing with a CCD camera as will be described below.

If the liquid crystal panel 9 is a display capable of displaying 60 frames per second, when the number of mirror side surfaces of the polygonal pyramid shape and the rotational speed are set at 10 per second, and the number of frame images of the liquid crystal panel 9 is set to 4, respective four side surfaces pass the same frame images while the mirror in the shape of a quadrangular pyramid rotates once, whereby display of 40 times/second can be realized. Further, with use of a display capable of high-speed display (high in refresh rate), the number of times of display per second can be increased for each direction by increasing the rotational frequency per second. Further, in addition to stationary information or images, moving images can be displayed.

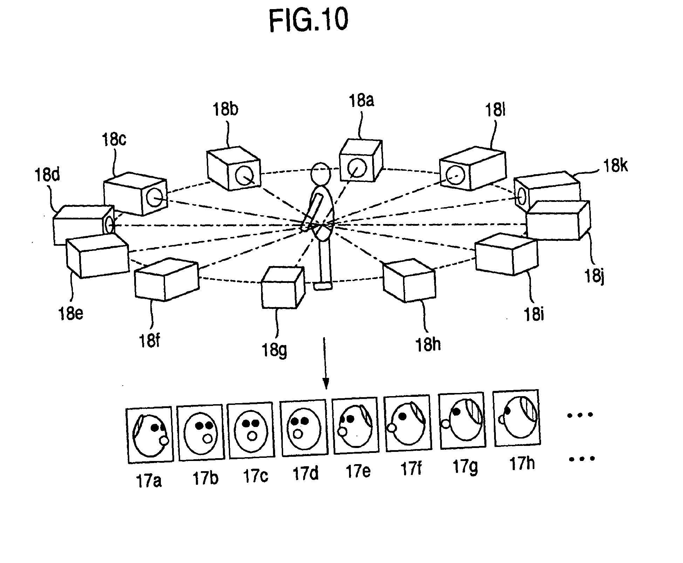

Next, by using Fig. 10, a method for creating the frame images 17a to 17p shown in Fig. 9 will be described. A plurality of imaging optical systems (CCD cameras) 18 are disposed on the circumference, and an object is placed in its center. The number and the disposition direction of the CCD cameras are desired to be the same as those of the respective LEDs on the LED light source plate 10 of the display apparatus in Fig. 5, but even if those are different, the images suitable for the LED disposition of the display apparatus can be created by performing image processing such as image interpolation. The object may be a moving object, and in that case, it can be recorded as a moving image (movie). Further, if the image processing of arranging the frame images 17a to 17p photographed by the CCD cameras on the circumference is performed in real time, and those are outputted to the liquid crystal panel 9 of the display apparatus in Fig. 5, image transmission in real time becomes possible.

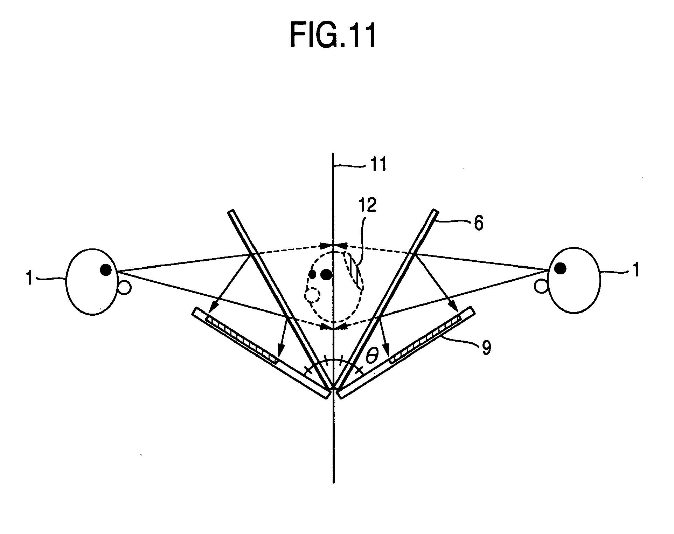

Next, by using Fig. 11, another embodiment of the mirror 6 in the shape of the n-angular pyramid in the display apparatus shown in Fig. 5 will be described.

In Fig. 5, the angle θ formed by the side surface of the mirror 6 in the shape of the n-angular pyramid and the liquid crystal panel 9 is described as 45 degrees, but it does not always need to be 45 degrees, and θ < 45 may be adopted as shown in Fig. 11, for example. Further, θ > 45 may be adopted, but in that case, the visual field range of the viewer 1 becomes narrow. However, the angle formed by the center axis 11 and the mirror 6, and the angle formed by the mirror 6 and the liquid crystal panel 9 have to be configured to be equal so that the mirror image 12 is seen on the center axis 11. Therefore, when the angle θ formed by the side surface of the mirror 6 and the liquid crystal panel 9 is smaller than 45 degrees, the liquid crystal panel 9 naturally has to be disposed obliquely in such a manner as to surround the mirror 6. The viewer 1 can see the mirror image 4 only from the space between the mirror 6 in the shape of the n-angular pyramid and the liquid crystal panel 9. Therefore, it is difficult to set θ to be too small, and it is necessary to determine the optimal value, taking account of the entire size.

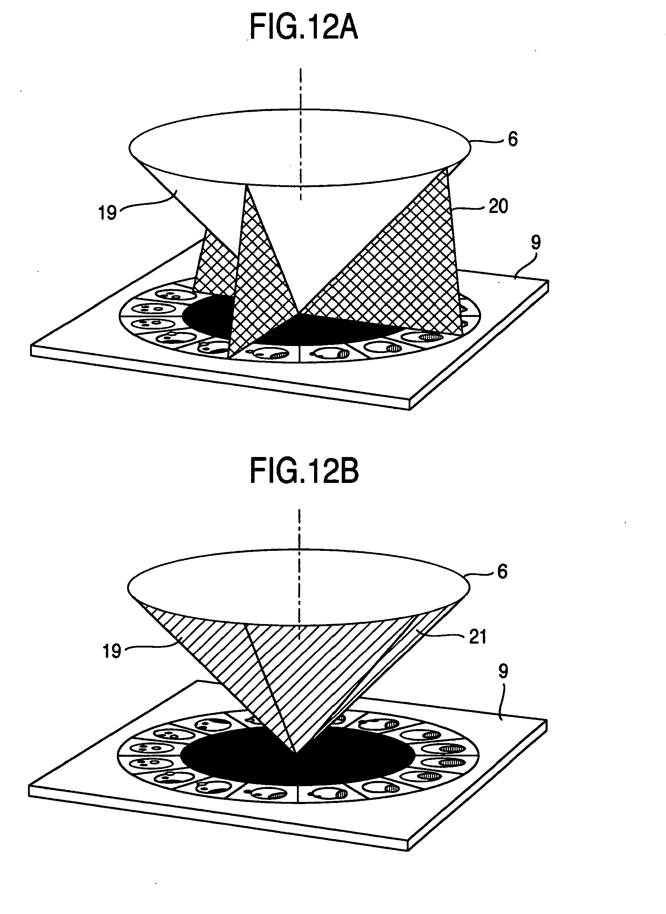

Next, by using Figs. 12A and 12B, a shielding method for preventing the image (mirror image on the center axis) of the display apparatus shown in Fig. 5 from looking like a plurality of images overlapping at the same time from any direction will be described. In this embodiment, it is conceivable that two or more mirror side surfaces are in the visible range of the viewer in most cases, as long as the viewer does not see from the position very close to the display apparatus (except for the case of a very narrow visual field range). Therefore, there arises the problem that if no treatment is performed for the mirror side surfaces, a plurality of mirror images are seen at the same time. In order to solve the above described problem, a fin 20 which shields light is attached to the boundary of each of the mirror side surfaces 19 so that only the mirror image which should be seen is seen from the position of the viewer, as shown in Fig. 12A. Thereby, only one mirror image can be seen when it is seen from between the fins, that is, from the front of the mirror side surface. Further, when the mirror images of the two mirrors are seen while intervening the fin therebetween, if the thickness of the fin is made sufficiently thin, there is no fear that the mirror image lacks by being concealed behind the fin. Further, instead of the fins 20, a view angle limiting filter 21 which is used for peeping prevention and the like for the displays of personal computers and cellular phones may be bonded to the surface of each of the mirror side surfaces 19 as shown in Fig. 12B. Further, other than this, the method of disposing a cylindrical lens for gathering light in the view angle limiting direction may be adopted. By adding the view angle limiting function, the viewer can see only the mirror image reflected by in the mirror which comes right in front of the viewer.

### (Embodiment 2)

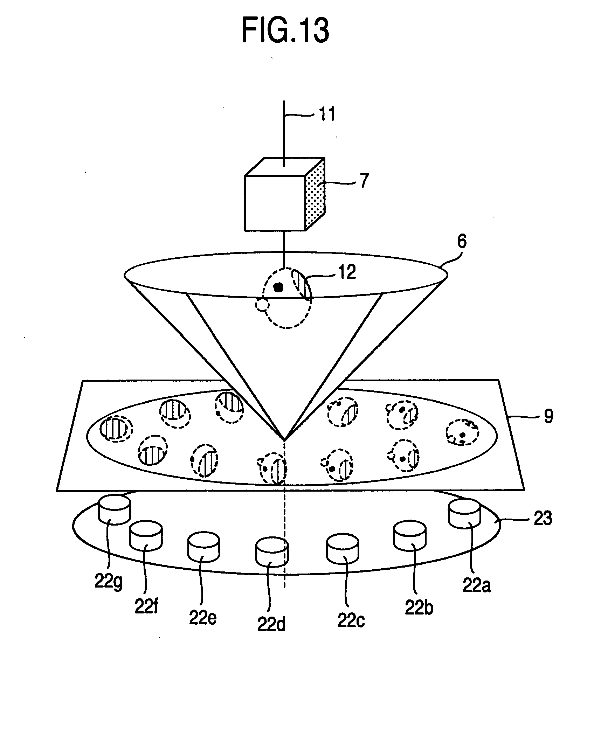

Next, a second embodiment of the display apparatus according to the present invention in which a stereoscopic image can be seen by going around the circumference will be described by using Figs. 13 to 16.

Fig. 13 is an external perspective view showing the second embodiment of the display apparatus according to the present invention. The second embodiment is configured such that the mirror 6 in the shape of the n-angular pyramid is rotated continuously or stepwise by the rotary mechanism 7, the liquid crystal panel 9 on which "m" images are displayed, and a light source plate 23 on which "m" compact stroboscopic light sources 22a to 22m which go on and off in sequence are placed below the mirror 6 in the shape of the n-angular pyramid, and at only the moment when the light of each of the stroboscopic light sources 22a to 22m hits on each of the frame images of the liquid crystal panel 9, the information to be seen from that direction can be seen as a mirror image 12 on the center axis 11. A means which detects the rotational angular velocity of the mirror 6 in the shape of the n-angular pyramid is provided, and the stroboscopic light sources 22a to 22m are lit or extinguished so as to be synchronized with the directions in which the mirror side surfaces face.

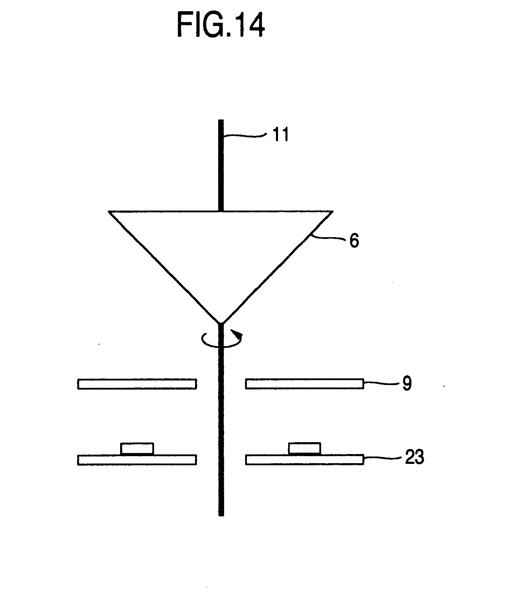

Fig. 14 is a side view showing the second embodiment of the display apparatus according to the present invention. The mirror 6 in the shape of the n-angular pyramid is fixed to the center axis and the rotary shaft 11, and is rotated continuously or stepwise by the rotary mechanism 7.

Because the liquid crystal panel 9 and the light source plate 23 on which the stroboscopic light sources 22a to 22m which are placed below the mirror 6 in the shape of the n-angular pyramid do not need to rotate, those are separated from the rotary shaft 11. When the stroboscopic light sources 22a to 22m are lit, the light travels vertically upward, becomes the backlight of the images displayed on the liquid crystal panel, and further, hits against the side surfaces of the mirror 6 in the shape of the n-angular pyramid. Further, the compact stroboscopic light sources 22a to 22m are point light sources, and therefore, the light paths need to be adjusted by using cylindrical lenses and Fresnel lenses as in the first embodiment, as shown in Fig. 8.

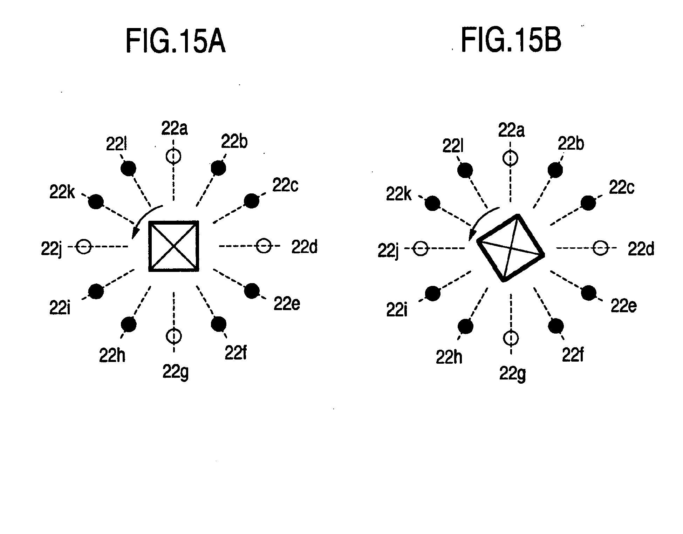

Next, by using Figs. 15A and 15B, the relationship of the mirror 6 in the shape of the n-angular pyramid and lighting and extinguishing of the compact stroboscopic light sources 22a to 22m will be described. Figs. 15A and 15B are views of the positional relationship of the mirror 6 in the shape of the n-angular pyramid and the compact stroboscopic light sources 22a to 22m in the display apparatus shown in Fig. 13 seen from above. Here, the explanation will be made assuming n = 4 and m' = 12. At the time of "t1", only the compact stroboscopic light sources (22a, 22d, 22g, 22j) which are right in front of the respective side surfaces of the mirror 6 in the shape of the n-angular pyramid light as shown in Fig. 15A, and the other compact stroboscopic light sources are extinguished. That is, the images in the liquid crystal panel 9 which are displayed directly above the compact stroboscopic light sources (22a, 22d, 22g, 22j) reflect in the respective side surfaces of the mirror 6 in the shape of the n-angular pyramid. Since the mirror 6 in the shape of the n-angular pyramid rotates, it always moves continuously or stepwise. That is, at the time of "t2" which is the time after "t" seconds passed slightly from the time "t1" in the state of Fig. 15A, the position is changed as shown in Fig. 15B, and the compact stroboscopic light sources right in front of the side surfaces of the mirror 6 in the shape of the n-angular pyramid change from (22a, 22d, 22g, 22j) to (221, 22c, 22f, 22i). Therefore, it is necessary to extinguish the compact stroboscopic light sources (22a, 22d, 22g, 22j) and light the compact stroboscopic light sources (221, 22c, 22f, 22i). The compact stroboscopic light sources (22a, 22d, 22g, 22j) remain to be extinguished until the side surfaces of the mirror 6 in the shape of the n-angular pyramid are right in front of those next time, and the images in the liquid crystal panel 9 which are directly above the compact stroboscopic light sources (22a, 22d, 22g, 22j) cannot be seen. However, if the extinguished interval is sufficiently short, this is not obtrusive owing to the afterimage phenomenon. Further, the relationship of the number "n" of the side surfaces of the mirror 6 in the shape of the n-angular pyramid and the number "m'" of the light sources of the compact stroboscopic light source 22 is optional as long as it is based on the formula of m' = k x n (k is a constant such as 1, 2 ...).

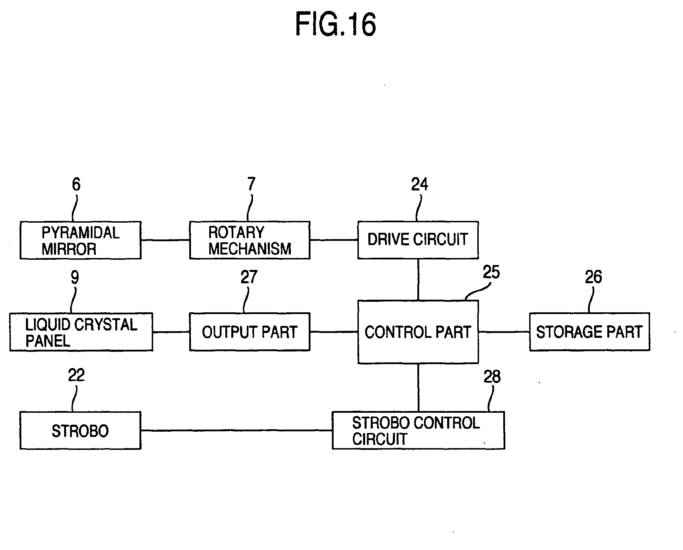

Fig. 16 is a diagram schematically showing a system configuration of the second embodiment of the display apparatus according to the present invention. Reference numeral 24 denotes a drive circuit, reference numeral 25 denotes a control part, reference numeral 26 denotes a storage part, reference numeral 27 denotes an output part and reference numeral 28 denotes a strobo control circuit, and the parts corresponding to the previous drawings are assigned with the same reference numerals and characters. In the drawing, image data expressing the frame images 17a to 17p shown in Fig. 9 is stored in the storage part 26. The control part 25 drives the rotary mechanism 7 to rotate the mirror 6 in the shape of the n-angular pyramid by controlling the drive circuit 24, reads the image data from the storage part 26 to reconstruct it on one screen, and supplies it to the output part 27 to display it on the liquid crystal panel 9. Further, the control part 25 detects the rotational angular velocity of the mirror 6 in the shape of the n-angular pyramid which is rotated by the rotary mechanism 7, and controls the strobo control circuit 28 so as to be in synchronization with the orientation of the mirror 6 to light and extinguish the stroboscopic light source 22.

### (Embodiment 3)

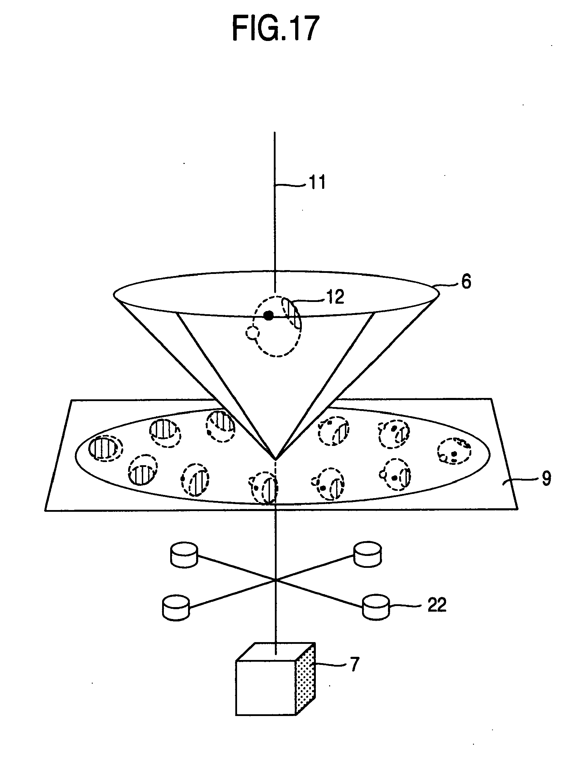

Next, a third embodiment of the display apparatus according to the present invention in which a stereoscopic image can be seen by going around it will be described by using Figs. 17 to 19.

Fig. 17 is an external perspective view showing the third embodiment of the display apparatus according to the present invention. The third embodiment is configured such that the mirror 6 in the shape of the n-angular pyramid and the "n" compact stroboscopic light sources 22 are rotated continuously or stepwise by the rotary mechanism 7, the liquid crystal panel 9 on which "m" images are displayed is placed below the mirror 6 in the shape of the n-angular pyramid, and the light of each of the compact stroboscopic light sources 22 is controlled to light only at the moment when it comes directly under each of the frame images of the liquid crystal panel 9, whereby the information to be seen in that direction can be seen as a mirror image 12 on the center axis 11. At this time, each of the compact stroboscopic light sources 22 is extinguished when it is located at the positions other than the position directly under each of the frame images of the liquid crystal panel 9, and thereby, the information to been seen can be projected more clearly. In the drawing, the case of n = 4, that is, the case of using the mirror in the shape of the quadrangular pyramid will be described for simplifying the explanation. The number "m" of the frame images which are displayed on the liquid crystal panel 9 is optional as long as it is in accordance with the formula of m = k x n (k is a constant such as 1, 2 ...). In the above described embodiments shown in Figs. 5 and 13, the number m' and the position of the light sources are fixed, and angular resolution of an image in the entire circumference ("m" division of 360 degrees) cannot be easily changed. On the contrary, in the embodiment shown in Fig. 17, the mirror side surfaces and the light sources are fixed to be always right in front of each other, and are independent from the frame images displayed on the liquid crystal panel 9, and therefore, the angular resolution of the image in the entire circumference can be easily changed. Thereby, the angular resolution can be adjusted in accordance with the kind of and the way of showing contents, and therefore, the degree of freedom of expression is increased. For example, when a three-dimensional model having a complicated structure is displayed, the angular resolution is increased to be able to express the difference as to how it is seen in accordance with the angle. Meanwhile, when the image display such as sign display is performed about in four directions, the display resolution per one direction can be increased as a substitute for reduction of the angular resolution.

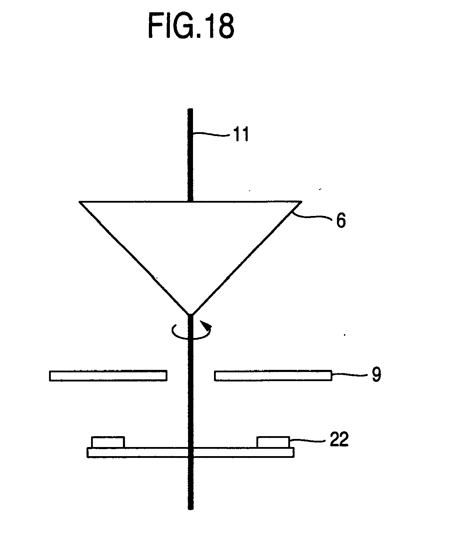

Fig. 18 is a side view showing the third embodiment of the display apparatus according to the present invention. The mirror 6 in the shape of the n-angular pyramid and the compact stroboscopic light sources 22a to 22m are fixed to the center axis and the rotary shaft 11, and are rotated continuously or stepwise by the rotary mechanism 7.

The liquid crystal panel 9 which is placed below the mirror 6 in the shape of the n-angular pyramid does not need to rotate, and therefore, it is separated from the rotary shaft 11. When the compact stroboscopic light sources 22a to 22m are lit, the light travels vertically upward to become the backlight of the images displayed on the liquid crystal panel, and further hits on the side surfaces of the mirror 6 in the shape of the n-angular pyramid. Further, the compact stroboscopic light sources 22a to 22m are point light sources, and therefore, the light path needs to be adjusted as in the first embodiment by using cylindrical lenses and Fresnel lenses as shown in Fig. 8.

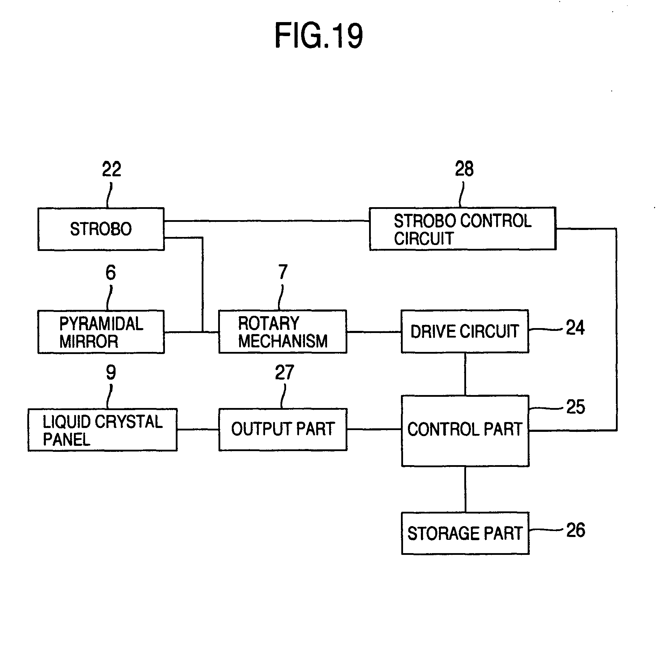

Fig. 19 is a diagram schematically showing the system configuration of the third embodiment of the display apparatus according to the present invention, and the parts corresponding to those of the previous drawings are assigned with the same reference numerals and characters. In the drawing, the storage part 26 stores the image data of the frame images 17a to 17p shown in Fig. 9. The control part 25 drives the rotary mechanism 7 to rotate the mirror 6 in the shape of the n-angular pyramid and the compact stroboscopic light sources 22a to 22m, by controlling the drive circuit 24, reads the image data from the storage part 26 to reconstruct the image data on one screen, and supplies it to the output part 27 to display it on the liquid crystal panel 9. The control part 25 stores the number and the positions of the frame images 17a to 17p displayed on the liquid crystal panel screen, and controls, via the strobo control circuit 28, the compact stroboscopic light sources 22a to 22m rotated by the rotary mechanism 7 so as to light those when the directions in which the compact stroboscopic light sources 22a to 22m face correspond to the positions of the respective frame images, and to extinguish those otherwise.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A display apparatus, comprising:
a projection part with planes combined into a polygonal pyramid shape, the projection part having a mirror on a surface thereof;
an image display part on which images to be projected to the respective planes of the projection part are displayed;
a light source part which causes a part of the images displayed on the image display part to be displayed on the planes of the projection part; and
a rotary mechanism which rotates at least the projection part, wherein
the planes of the projection part and the image display part are arranged so that the projected image is formed as a mirror image on an axis of the polygonal pyramid.

2. The display apparatus according to claim 1, wherein the light source part comprises a plurality of light sources, and the display apparatus further comprising a detecting means which detects rotational speed of the projection part, and a control means which performs lighting control of the plurality of light sources in accordance with the directions in which the planes of the polygonal pyramid face.

3. The display apparatus according to claim 1, further comprising a slit panel between the projection part and the light source part, wherein a slit of the slit panel allows a part of the light from the light source to irradiate the image of the image display part, and the rotary mechanism rotates the projection part and the slit together.

4. The display apparatus according to claim 3, wherein the slit panel is provided between the image display part and the light source part, or between the image display part and the projection part.

5. The display apparatus according to claim 1, wherein a light source of the light source part is an LED.

6. The display apparatus according to claim 3, wherein the light source part comprises a plurality of light sources, and the number of the plurality of light sources or the number of the images of the image display part is equal to the number obtained by multiplying the number of the slits of the slit panel by a constant.

7. The display apparatus according to claim 1, comprising a liquid crystal panel in which the image display part and the light source part are integrated, the liquid crystal panel switching so as to display a part of the plurality of images on the mirror.

8. The display apparatus according to claim 1, wherein a light source of the light source part is a strobo.

9. The display apparatus according to claim 1, comprising a light path adjusting means which diffuses or gathers the light from the light source part.

10. The display apparatus according to claim 1, wherein a means for limiting a view angle is provided on the plane of the polygonal pyramid.

11. The display apparatus according to claim 10, wherein the view angle limiting means is provided in a boundary of the polygonal pyramid.

12. The display apparatus according to claim 10, wherein the respective planes of the polygonal pyramid are covered with a view angle limiting filter.

13. The display apparatus according to claim 1, wherein the plurality of images displayed on the image display part are images obtained by photographing an object from a plurality of directions.
